# EUROPÄISCHE PATENTANMELDUNG

(11) **EP 0 627 562 A1**
(43) Veröffentlichungstag der Anmeldung: **07.12.1994**
(21) Anmeldenummer: 94108337.0
(22) Anmeldetag: 30.05.1994
(51) Int. Cl.: F16B 5/00

(54) **Klemmelement zur Befestigung flacher Körper über einer Unterlage**

(30) Priorität: 01.06.1993 DE 4318175
(71) Anmelder: SIEMENS SOLAR GmbH, D-80807 München (DE)
(72) Erfinder: Riermeier, Manfred, D-85467 Oberneuching (DE)
(74) Vertreter: Fuchs, Franz-Josef, Dr.-Ing.

(57) **Zusammenfassung**

Insbesondere zur Befestigung von Solarmodulen (SM) über einer Unterlage (UL) wird ein Klemmelement mit einer annähernd ebenen Auflagefläche (AF) vorgeschlagen, welches eine Führung (ES) für ein einsteckbares und mit Klemmbacken (KB) versehenes Oberteil (OT) aufweist. Dieses und das entsprechende Unterteil (UT) mit der Auflagefläche sind aus Stahlblechprofilen gefertigt und ermöglichen das kippsichere Befestigen von ein oder zwei nebeneinander angeordneten flachen Körpern.

## Beschreibung

Ein Solarmodul ist aus einer Vielzahl einzelner Solarzellen aufgebaut, die auf einem großflächigen flachen Substrat angeordnet und dort elektrisch miteinander verschalten sind. Zur elektrischen Versorgung eines größeren Stromverbrauchers, zum Beispiel eines oder mehrerer Haushalte ist es erforderlich, mehrere solcher Solarmodule mit einer Leistung von beispielsweise je 50 Watt aufzustellen. Zur Aufstellung der Solarmodule stehen ungenutzte Flächen wie beispielsweise Gebäudewände und Gebäudedächer zur Verfügung. Wenn noch mehr elektrische Leistung benötigt wird, wird eine Vielzahl von Solarmodulen in sogenannten Solarenergieparks aufgestellt und dort auf extra Gestellen befestigt.

Die Befestigung von Solarmodulen an beliebigen Unterlagen kann beispielsweise über den Rahmen erfolgen, sofern dieser geeignete Befestigungsvorrichtungen aufweist. Rahmenlose Solarmodule erfordern dagegen eine spezielle Befestigung, beispielsweise eine Montageklemme, wie sie in der DE 41 30 214 A1 vorgeschlagen wird. Die Montageklemme wird über ihre Bodenplatte auf der Unterlage befestigt. Die Solarmodule werden von beiden Seiten in ein doppelt U-förmiges Profil eingeschoben, wobei sich eine überlappende schindelartige Anordnung der Solarmodule erzielen läßt.

Nachteilig an dieser Montageklemme ist, daß die Solarmodule nur in das Profil eingesteckt sind und der Halt nur durch eine Gummidichtung gewährleistet ist. Außerdem ist das Entfernen einzelner Solarmodule aus einer Anordnung von mit solchen Montageklemmen befestigten Solarmodulen erschwert.

Aufgabe der vorliegenden Erfindung ist es daher, ein Klemmelement zur Befestigung von flachen Körpern und insbesondere von Solarmodulen über einer Unterlage anzugeben, welches einen verbesserten Halt für die zu befestigenden Solarmodule gewährleistet, mit welchem eine einfache Montage von Solarmodulen auf beliebigen Unterlagen ermöglicht wird und die außerdem das schnelle Entfernen einzelner Solarmodule aus einer Anordnung heraus erlaubt.

Diese Aufgabe wird erfindungsgemäß gelöst durch ein Klemmelement mit den Merkmalen von Anspruch 1. Weitere Ausgestaltungen der Erfindung sowie eine bevorzugte Verwendung sind den Unteransprüchen zu entnehmen.

Das Klemmelement besteht aus drei einander angepaßten Teilen, nämlich einem auf der Unterlage aufliegenden Unterteil, einem das Gegenstück des Unterteils bildenden Oberteil und einem zentralen Befestigungselement, welches eine Zugkraft ausübt, um die flachen Körper, insbesondere die Solarmodule zwischen Ober- und Unterteil einzuklemmen, und um das Klemmelement auf einer Unterlage zu befestigen. Das Klemmelement ist symmetrisch zu einer senkrecht zur Unterlage stehenden und die Längsachse enthaltenden Spiegelebene aufgebaut und ermöglicht das gleichzeitige Einklemmen zweier flacher Körper beiderseits des Befestigungselementes bzw. beiderseits des U-förmigen Bereichs des Oberteils. Die gleichartige Ausformung der schienenartigen Einstülpung im Unterteil und des U-förmigen Oberteils ermöglicht ein paßgenaues Einstecken des Oberteils in die als Führungsschiene ausgebildete Einstülpung, so daß das Oberteil gegen ein Abkippen um die Längsachse gesichert ist. Die schienenartige Einstülpung, die vorzugsweise vertikale Seitenwände besitzt, gibt dem Oberteil einen sicheren Halt und ermöglicht es auch, das Klemmelement endständig einzusetzen und zum Einklemmen eines einzelnen Körpers zu verwenden.

Die beiden Teile des Klemmelements bestehen aus gebogenen Stahlblechprofilen, die "endlos" hergestellt und anschließend in Teile geeigneter Länge unterteilt werden können, oder sie werden einzeln durch Biegen entsprechender Blechstreifen gefertigt.

Im folgenden wird die Erfindung anhand von fünf Figuren näher erläutert.
- Figur 1: zeigt im schematischen Querschnitt die Befestigung zweier Solarmodule auf einer Unterlage mit Hilfe des Klemmelements,
- Figur 2: zeigt die gleiche Anordnung von oben,
- Figur 3 und 4: zeigen ein Oberteil im Querschnitt bzw. in der Seitenansicht, während
- Figur 5: ein Unterteil im schematischen Querschnitt zeigt.

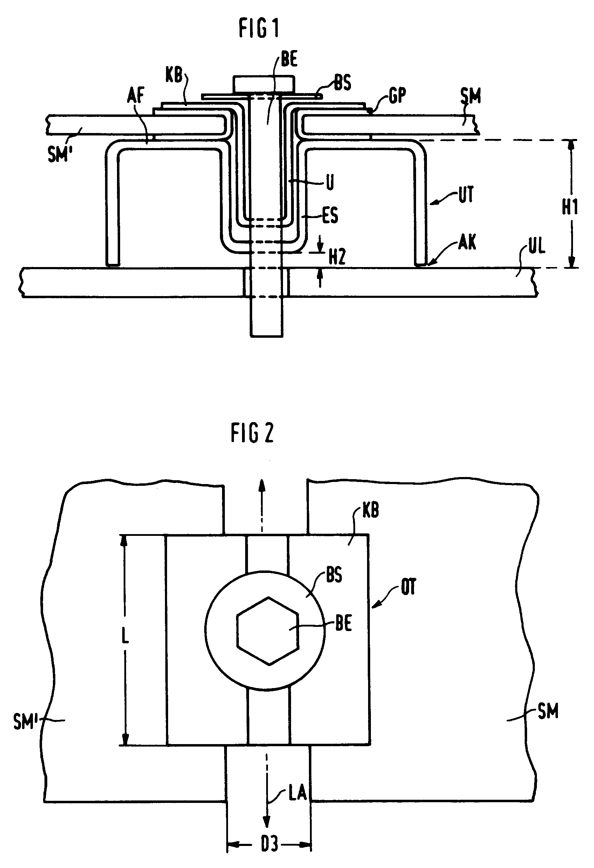

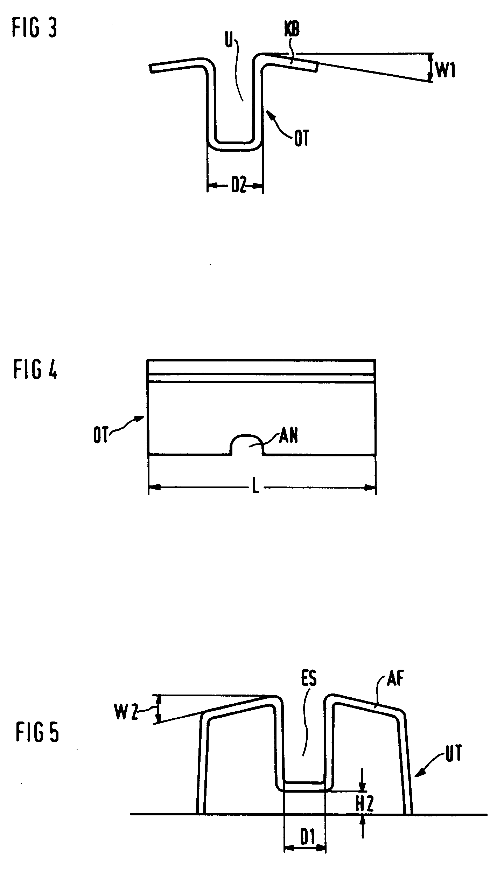

In Figur 1 ist dargestellt, wie gemäß einer Ausführungsform der Erfindung zwei Solarmodule SM, SM' auf einer Unterlage UL befestigt werden können. Der senkrecht zur Längsachse LA des Klemmelements dargestellte Querschnitt zeigt gut die Symmetrie der Teile hinsichtlich einer vertikal zur Unterlagen UL angeordneten und die Längsachse enthaltenden Spiegelebene. Das Klemmelement soll die Solarmodule SM in einer vorgegebenen Höhe H1 sicher über einer Unterlage UL befestigen. Das Unterteil UT liegt mit den Auflagekanten AK auf der Unterlage UL auf. In der dargestellten einfachsten Ausführung entspricht die Auflagefläche des Unterteils UT der Querschnittsfläche des verwendeten Stahlblechs. Möglich ist es auch, daß die Auflagekante AK seitlich nach innen oder außen abgebogen ist und dadurch eine größere Auflagefläche des Unterteils auf der Unterlage geschaffen wird.

Aus Stabilitätsgründen sind die, die Auflagefläche AF mit der Auflagekante AK verbindenden Seitenteile des Unterteils annähernd senkrecht zur Unterlage UL ausgerichtet. Die Auflagefläche AF selbst ist annähernd eben bzw. parallel zur Unterlage UL, um für die ebenfalls parallel zur Unterlage UL zu befestigenden Solarmodule SM eine maximale Auflagefläche zu bieten.

Die Auflagefläche AF des Unterteils UT wird durch eine zentral angeordnete, nach unten weisende Einstülpung ES zweigeteilt. Die über das gesamte Unterteil schienenartige Einstülpung ES ist im Querschnitt U-förmig. Sie besitzt annähernd senkrechte Seitenwände und einen Innendurchmesser D1. Die Einstülpung ES ist dabei nur so tief, daß bei auf der Unterlage UL aufliegenden Auflagekanten AK zwischen dem Boden der Einstülpung ES und der Unterlage UL eine lichte Höhe H2 verbleibt.

Das Oberteil OT weist ebenfalls ein U-förmiges Profil U auf, dessen Oberkanten seitlich abgebogen sind und so die Klemmbacken KB ausbilden. Das U besitzt annähernd vertikale Schenkel und einen Außendurchmesser D2, der etwas geringer ist als der Innendurchmesser D1 des Unterteils UT. Dadurch ist ein paßgenaues Einstecken des Oberteils OT in das Unterteil UT möglich. Die schienenartige Einstülpung ES bildet eine Führung für das Oberteil OT, so daß dieses auch bei unterschiedlicher Einstecktiefe sicher gegen ein Abkippen um die Längsachse LA gelagert ist. Die Klemmbacken KB sind dabei annähernd parallel zur Unterlage UL bzw. zur Auflagefläche AF. Sie können sich über die gesamte Auflagefläche AF erstrecken oder wie dargestellt eine etwas geringere Breite als das Unterteil UT besitzen.

Die Solarmodule SM liegen auf der Auflagefläche AF auf und werden durch Klemmbacken des in das Unterteil UT eingesteckten Oberteils gehalten. Da die Kanten der Solarmodule üblicherweise Glaskanten sind, wird zu deren Schutz und zum besseren Kalt des Solarmoduls SM in dem Klemmelement ein dem Kantenprofil des So-larmoduls entsprechendes Gummiprofil GP vorgesehen. Dieses schmiegt sich um die im Klemmelement eingeklemmte Kante des Solarmoduls und kann seinerseits ein die Reibung erhöhendes Außenprofil aufweisen und ist beispielsweise beidseitig gerippt.

Zur Befestigung des Klemmelements auf der Unterlage ist ein stift- oder bolzenförmiges Befestigungselement BE vorgesehen. Es greift durch einander überlappende Ausnehmungen im Boden des U und im Boden der schienenartigen Einstülpung ES in die Unterlage UL hinein oder durch diese hindurch. Das Befestigungselement BE ist zur Ausübung einer Zugkraft geeignet, mit der das Oberteil OT gegen das Unterteil UT und dieses gegen die Unterlage UL gezogen wird. Dazu ist es als Schraube, Steckbolzen oder Niete ausgebildet. Als Bolzen ist jenseits der Unterlage UL ein Sicherungsstift erforderlich, während eine Schraube mit Hilfe eines Gewindes in der Unterlage Halt finden kann oder mit einer Mutter jenseits der Unterlage UL gesichert ist. Bevorzugt ist ein Befestigungselement BE, das eine einfach wieder lösbare Befestigung des Klemmelements bzw. der Solarmodule auf der Unterlage ermöglicht. Zur Erhöhung des Auflagedrucks kann das Befestigungselement BE durch eine Beilagscheibe BS gegen ein Durchrutschen gesichert sein. Vorzugsweise ist der Durchmesser des Befestigungselements BE an das U-förmige Oberteil OT so angepaßt, daß dessen Seitenwände eine sichere Führung für das Befestigungselement BE ergeben.

Figur 2 zeigt die gleiche Anordnung von oben gesehen. Vorteilhaft und völlig ausreichend ist es, das Klemmelement mittels nur eines Befestigungselementes BE auf der Unterlage zu befestigen. Dadurch ist eine gegebenenfalls erforderliche Ausrichtung des Klemmelements durch Drehen um den Befestigungspunkt möglich und damit ein Verkanten der Solarmodule gegen das Klemmelement erschwert. Oberteil und Unterteil weisen vorzugsweise die gleiche parallel zur Längsachse LA bestimmte Länge L auf. Sie wird in Abhängigkeit von der zu erwartenden maximalen mechanischen Belastung des Klemmelements bestimmt, die sich beispielsweise aus Größe und Gewicht der Solarmodule, dem Neigungswinkel der Unterlage zur Horizontalen, einer angenommenen maximalen Windbelastung und der Empfindlichkeit der verwendeten Materialien bemißt. Mit dem Klemmelement wird die Befestigung zweier Solarmodule SM und SM' im Abstand D3 zueinander ermöglicht. Wegen des ohnehin relativ großen Flächenbedarfs der Solarmodule SM kann der von den Abmessungen des Oberteils OT bestimmte Abstand D3 durch entsprechende Bemessung des Klemmelements minimiert sein.

Zur Befestigung zweier Solarmodule SM und SM' entlang der dargestellten Kanten kann ein einziges Klemmelement ausreichend sein, vorzugsweise werden jedoch zwei oder mehr gleichmäßig über die Länge des Solarmoduls verteilte Klemmelemente vorgesehen. Die beiden dargestellten Solarmodule sind selbstverständlich auch an den gegenüberliegenden Kanten entsprechend mit Klemmelementen befestigt und können Teil einer größeren Anordnung einer Vielzahl weiterer Solarmodule sein. Bei der Anordnung in mehreren Reihen hat ein Solarmodul nicht nur einen rechten und/oder linken Nachbarn, sondern auch einen oberen und/ oder unteren, mit dem zusammen es durch weitere Klemmelemente befestigt bzw. verspannt sein kann.

Durch die kippsichere Führung des Oberteils im Unterteil ist es außerdem möglich, ein Klemmelement zur endständigen Befestigung eines Solarmoduls zu verwenden, wobei die endständigen Klemmelemente jeweils nur ein Solarmodul SM einklemmen.

Figur 3 zeigt eine besondere Ausgestaltung des Oberteils OT im schematischen Querschnitt. Die Klemmbacken KB sind nicht ganz rechtwinklig zu den Schenkeln des U angeordnet und zeigen eine nach außen abfallende Neigung. Die Klemmbacken KB können einen Neigungswinkel W1 von bis zu 3° gegen die Horizontale aufweisen. Aufgrund des für das Oberteil OT verwendeten biegeelastischen Stahlblechs dient diese Neigung der Klemmbacken KB dazu, einen verbesserten Halt der Solarmodule im Klemmelement zu gewährleisten. Die durch das Befestigungselement BE ausgeübte Zugkraft drückt die Klemmbacken primär gegen ein eingeklemmtes Solarmodul, wobei sich die Klemmbacken KB so weit verbiegen, bis nahezu eine parallele Ausrichtung der Klemmbacken zur Oberfläche der Solarmodule erreicht ist.

Für die vorgesehene Verwendung des Klemmelements zur Befestigung von Solarmodulen wird vorzugsweise ein nicht rostendes Stahlblech mit entfetteter Oberfläche verwendet, wobei eine Blechstärke von ca. 0,8 bis 1 mm ausreichend ist. Beim Biegen des Stahlblechs zum Profil läßt sich ein Biegeradius von ca. 1,5 mm einhalten.

Figur 4 zeigt das Oberteil OT in der Seitenansicht, wobei die Ausnehmung AN zur Durchführung des Befestigungselements BE zu erkennen ist. Die Ausnehmung kann gebohrt oder gestanzt sein und vor oder nach dem Biegen des Profils erzeugt sein. Vorzugsweise wird jedes Klemmelement bzw. jedes Ober- und Unterteil getrennt aus einem einzelnen Stahlblechstreifen gebogen, wobei die Ausnehmung AN bereits vor dem Biegen als Langloch in das Blech eingebracht wird. Bei einem Durchmesser des Befestigungselementes von 6 mm ist beispielsweise ein Langloch mit den Ausmaßen 7 x 15 mm ausreichend.

Entsprechendes gilt für die in Figur 5 dargestellte Ausgestaltung des Unterteils UT. Auch hier kann die Auflagefläche AF geneigt sein und nach außen fallen. Mit der Horizontalen kann sie beispielsweise einen Winkel bis zu 5° einnehmen. Auch hier gilt, daß bei Ausüben der Zugkraft durch das Befestigungselement eine elastische Verbiegung des Unterteils soweit stattfindet, bis sich die Auflagefläche AF parallel zum aufliegenden Solarmodul ausgerichtet hat. Die Höhe H2, in der der Boden der Einstülpung ES über der Unterlage angeordnet ist, verringert sich dementsprechend beim Einspannen bzw. beim Ausüben der Zug-kraft, ist aber vorzugsweise auch nach dem Befestigen von Null verschieden und beträgt dann noch min. 0,5 mm.. Dadurch wird eine in gewisser Weise federnde Aufhängung der Solarmodule erzielt, die die Bruchgefahr für die Solarmodule bei starker Windbelastung der Anordnung im Freien reduziert. Das Unterteil besteht ebenfalls aus nicht rostendem Stahl, weist aber mit beispielsweise 1,5 mm eine etwas größere Blechstärke als das Oberteil auf.

Klemmelemente, die mit den angegebenen Maßen in einer Länge von zum Beispiel 70 mmgefertigt wurden, wurden zur Befestigung von rahmenlosen Solarmodulen bis zu Ausmaßen von 652 mm x 1307 mm entwickelt und getestet. Die Dimensionierung ist dermaßen, daß eine Berührung der Einstülpung des Unterteils mit der Unterlage, welche ein Gestell sein kann, erst bei Windlasten von mehr 2400 Pa auftreten können. Der zwischen den Solarmodulen SM verbleibende Spalt hat den weiteren Vorteil, daß bei Windbelastung keine geschlossene Angriffsfläche zur Verfügung steht. Die Klammer gewährleistet außerdem einen ausreichenden Abstand zum Gestell. Ein Austausch einzelner Solarmodule ist leicht und jederzeit möglich.

Obwohl das Klemmelement insbesondere für die Befestigung von Solarmodulen geeignet ist, können mit ihm beliebige flache Körper in einem Abstand zu einer Unterlage auf bzw. über dieser befestigt werden. Insbesondere ist jedoch Befestigung von zerbrechlichen plattenförmigen Körpern geeignet. Bei entsprechend großer Ausgestaltung des Klemmelements können unterschiedliche Einstecktiefen des Oberteils in das Unterteils erlaubt sein, bzw. ist auch bei unterschiedlichen Einstecktiefen eine kippsichere Befestigung flacher Körper möglich. Dadurch ist es möglich, die spannbreite zu variieren. Damit können unterschiedlich dicke Körper mit ein und derselben Klammer eingeklemmt bzw. befestigt werden.

## Patentansprüche

1. Klemmelement zur Befestigung flacher Körper (SU) an deren Kanten über einer Unterlage (UL) durch Einklemmen der Kanten zwischen der annähernd ebenen Auflagefläche (AF) eines Unterteils (UT) und den Klemmbacken (KB) eines Oberteils (OT),
- bei dem Oberteil (OT) und Unterteil (UT) gebogene Stahlblechprofile mit zu einer Längsachse (LA) parallelen Biegekanten sind,
- bei dem die Auflagefläche (AF) eine zentrale, schienenartige und im Querschnitt U-förmige Einstülpung (ES) aufweist,
- bei dem das Oberteil (OT) derart in Form eines U gebogen ist, daß der Außendurchmesser des U dem Innendurchmesser der schienenartigen Einstülpung (ES) entspricht, und so kippsicher in das Unterteil (UT) einsteckbar ist,
- bei dem die Oberkante der Schenkel des U beidseits nach außen gebogen sind und die Klemmbacken (KB) ausbilden,
- bei dem das Unterteil (UT) beidseits der Auflagefläche (AF) nach unten gebogen ist und auf der Unterlage Aufliegekanten (AK) ausbildet und
- bei dem zumindest ein zentrales Befestigungselement (BE) vorgesehen ist, welches mittels einer Zugkraft das Oberteil (OT) mitsamt dazwischen angeordnetem Körper (SM) gegen das Unterteil (UT) und beide gegen die Unterlage (UL) zu drücken vermag.

2. Klemmelement nach Anspruch 1,
bei dem das Befestigungselement (BE) als Schraube, Niete oder Steckbolzen ausgebildet ist und bei dem dafür im Oberteil (OT) und Unterteil (UT) überlappende Ausnehmungen (AN) im Bereich der Einstülpung (ES) bzw. des U vorgesehen sind.

3. Klemmelement nach Anspruch 1 oder 2,
bei dem sowohl Klemmbacken (KB) als auch Auflagefläche (AF) leicht nach außend abfallend geneigt sind.

4. Klemmelement nach einem der Ansprüche 1 bis 3,
bei dem der Boden der schienenartigen Einstülpung (ES) einen von Null verschiedenen lichten Abstand (H2) zur Unterlage (UL) aufweist.

5. Klemmelement nach einem der Ansprüche 1 bis 4,
bei dem der Durchmesser des Befestigungselements (BE) dem Innendurchmesser des U entspricht.

6. Klemmelement nach einem der Ansprüche 1 bis 5,
bei dem Gummiprofile (GP) zum Schutz der Kanten der flachen Körper (SM) vorgesehen sind, die deren Kantenprofil angepaßt sind.

7. Klemmelement nach einem der Ansprüche 1 bis 6,
bei dem das Oberteil (OT) und das Unterteil (UT) aus Edelstahlblech gebogen sind.

8. Verwendung des Klemmelements zur Befestigung und zum Verspannen einer Anordnung von Solarmodulen über einer Unterlage (UL), insbesondere über einem Gestellträger.
